# EUROPEAN PATENT APPLICATION

(11) **EP 2 175 397 A2**
(43) Date of publication of application: **14.04.2010**
(21) Application number: 09168137.9
(22) Date of filing: 19.08.2009
(51) Int. Cl.: G06K 15/02, G06T 11/60

(54) **Image forming apparatus and method thereof**

(30) Priority: 10.10.2008 KR 20080099771
(71) Applicant: SAMSUNG ELECTRONICS CO., LTD., Suwon-si, Gyeonggi-do (KR)
(72) Inventor: Kim, Dae-hyun, Gyeonggi-do (KR)
(74) Representative: Walaski, Jan Filip

(57) **Abstract**

An image forming apparatus and image forming method therefor, the image forming apparatus including: a communication interface to receive an XML paper specification (XPS) file; an XPS emulator unit to replace redundancy of the received XPS file with a parsing object and to render the XPS file in which the redundancy has been replaced; and a controller to output the rendered XPS file. Accordingly, resources used to output the XPS file are reduced.

## Description

Aspects of the present invention relate to an image forming apparatus and a method thereof, and more particularly, to an image forming apparatus that replaces redundancy in an XML paper specification (XPS) file, thereby reducing an amount of resources used to output the XPS file, and a method thereof.

The term "image forming apparatus," as used herein, refers to an apparatus that prints printing data generated by a terminal device (such as a computer) on a print medium (such as paper, a transparency, etc.). Such image forming apparatuses may be photocopiers, printers, facsimile machines, or multifunction peripherals (MFP) integrating operations of the forgoing devices into a single device.

Currently, the image forming apparatus supports a direct printing operation with respect to documents of PDF, TIFF, and JPG formats. The direct printing operation is an operation that allows a printing job to be performed simply by transmitting a file to the image forming apparatus without executing an extra application in a terminal device (such as a personal computer (PC), a laptop computer, a personal digital assistant (PDA), a digital camera, a mobile phone, etc.).

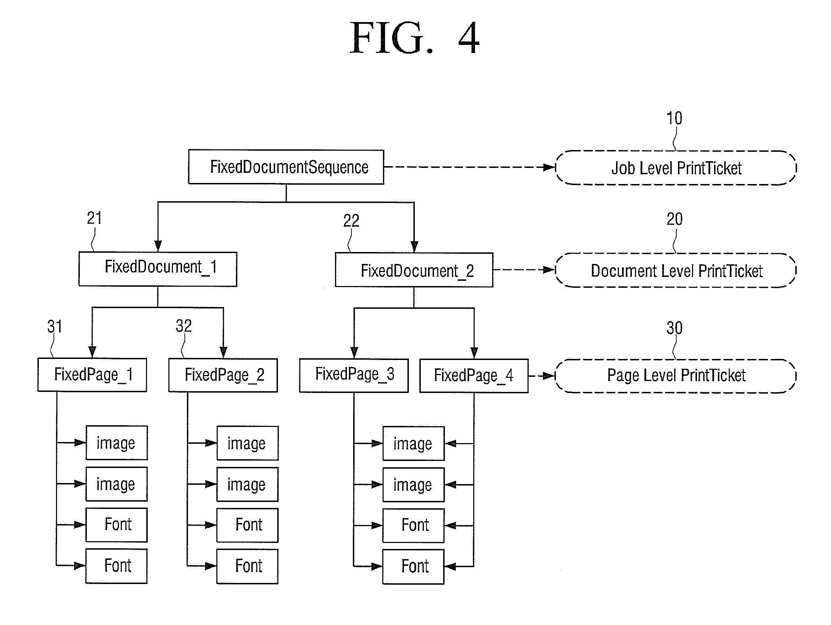

An XML paper specification (XPS) file provides data to support such a direct printing operation. The XPS file is an electronic file of a fixed layout that enables maintenance of a document template and sharing of a file. Furthermore, the XPS file also organizes resources used for a document or a job in a directory structure and packs data describing reference relationships among the resources using XML and the resources in a ZIP format. The XPS file has a logical structure of a tree shape having a plurality of layers as shown in FIG. 4.

FIG. 4 is a conceptual view to explain a logical structure of the XPS file. Referring to FIG. 4, printing option information set in the XPS file is defined as a PrintTicket in the XPS file and has a hierarchical structure including a job level 10, a document level 20, and a page level 30. The document level 20 and the page level 30 may include a plurality of documents and a plurality of pages, respectively, and different printing options may be set for each document and each page. More specifically, the printing settings in the job level 10 are applied to the whole job, the printing settings in the document level 20 are applied to a corresponding document, and the printing settings in the page level 30 are applied to a corresponding page.

However, the image forming apparatus uses more resources in processing the XPS file than in processing data written in a conventional page description language (PDL). Therefore, an image forming apparatus having low resources has difficulty in printing the XPS file. Particularly, in performing direct printing with respect to the XPS file, it is not possible to perform a post-processing with respect to the XPS file in the XPS printer filter pipe line path. Therefore, there is a problem that a more resources are used than when printing the XPS file that has already been post-processed.

Aspects of the present invention provide an image forming apparatus to replace redundancy in an XPS file and to reduce a resource used to output the XPS file, and a method thereof.

According to an aspect of the present invention, there is provided an image forming apparatus, including: a communication interface to receive an XML paper specification (XPS) file; a XPS emulator unit to replace redundancy of the received XPS file with a parsing object and to render the XPS file in which the redundancy has been replaced; and a controller to output the rendered XPS file.

The XPS emulator unit may include: a unpacking unit to unpack the received XPS file; a parsing unit to parse the unpacked XPS file; a detection unit to detect whether the parsed XPS file includes the redundancy; a resource optimizing unit to replace the redundancy included in the XPS file with the parsing object; and a rendering unit to render the XPS file in which the redundancy has been replaced.

The communication interface may determine whether the received file is the XPS file.

The image forming apparatus may further include a user interface to receive a resource save printing command for the XPS file.

The user interface may display the redundancy included in the XPS file according to the parsing.

When the XPS file includes a slice image that is integrable into a single image object or a duplicate object for a same area, the detection unit may determine that the XPS file includes the redundancy.

When the XPS file includes the redundancy, the detection unit may determine a type of the redundancy and/or may determine whether the redundancy is replaceable in the image forming apparatus.

When the XPS file includes the redundancy that is irreplaceable in the image forming apparatus, the use interface may display corresponding information.

The resource optimizing unit may not replace the redundancy for a page including the irreplaceable redundancy.

The controller may not output a page including the irreplaceable redundancy.

When the parsed XPS file includes a slice image that is integrable into a single image object, the resource optimizing unit may replace the slice image with an integrated image object.

When the parsed XPS file includes a duplicate object for a same area, the resource optimizing unit may remove the duplicate object.

The image forming apparatus may further include a storage unit to store the XPS file in which the redundancy has been replaced.

According to another aspect of the present invention, there is provided an image forming method for an image forming apparatus, the image forming method including: receiving an XML paper specification (XPS) file; parsing the received XPS file; replacing redundancy of the received XPS file with a parsing object according to the parsing; rendering the XPS file in which the redundancy has been replaced with the parsing object; and outputting the rendered XPS file.

The image forming method may further include determining whether the received file is the XPS file.

The image forming method may further include receiving a resource save printing command for the XPS file.

The image forming method may further include displaying the redundancy included in the XPS file according to the parsing.

The replacing of the redundancy may include, when the parsed XPS file includes a slice image that is integrable into a single image object, replacing the slice image with an integrated image object.

The replacing of the redundancy may include, when the parsed XPS file includes a duplicate object for a same area, removing the duplicate object.

The parsing may include determining a type of the redundancy included in the XPS file and/or determining whether the redundancy is replaceable in the image forming apparatus.

The image forming method may further include, when the XPS file includes the redundancy that is irreplaceable in the image forming apparatus, displaying corresponding information to a user.

The replacing of the redundancy may include, when the XPS file includes the redundancy that is irreplaceable in the image forming apparatus, not replacing the redundancy for a page including the irreplaceable redundancy.

The outputting may include not a page including the redundancy that is irreplaceable in the image forming apparatus.

The image forming method may further include storing the XPS file in which the redundancy has been replaced.

According to another aspect of the present invention, there is provided a device to process an XML paper specification (XPS) file, the device including an XPS emulator unit to replace redundancy in the XPS file with a parsing object and to render the XPS file in which redundancy has been replaced.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a block diagram of an image forming apparatus according to an embodiment of the present invention;
FIG. 2 is a flowchart illustrating an image forming method according to an embodiment of the present invention;
FIG. 3 is a flowchart illustrating a rendering operation of FIG. 2 in detail; and
FIG. 4 is a conceptual view provided to explain a logical structure of the XPS file.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

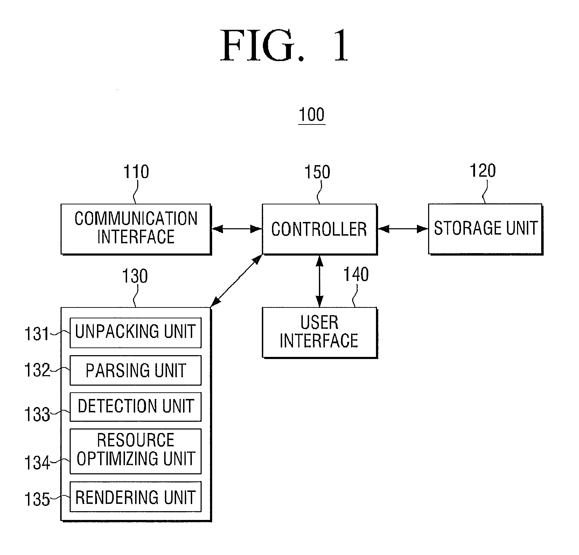

FIG. 1 is a block diagram of an image forming apparatus 100 according to an embodiment of the present invention. Referring to FIG. 1, an image forming apparatus 100 includes a communication interface 110, a storage unit 120, an XML paper specification (XPS) emulator unit 130, a user interface 140, and a controller 150.

The communication interface 110 is connected to a terminal device (not shown), such as a PC, a laptop computer, a personal digital assistant (PDA), a digital device, a mobile phone, etc., and receives an XML paper specification (XPS) file. Specifically, the communication interface 110 connects the image forming apparatus 100 to an external device, and connects to the terminal device through a local area network (LAN) or the Internet. However, it is understood that aspects of the present invention are not limited thereto. For example, according to other aspects, the image forming apparatus connects directly to the terminal device through a wired or wireless connection, such as through an Ethernet port, a universal serial bus (USB) port, an infrared connection, and/or a Bluetooth connection.

Herein, the XPS file is printing data in which printing options are set in a tree structure having a plurality of layers as described above. More specifically, the XPS file has a plurality of layers and a separate printing option is set for each layer and each node of the tree structure. For example, as shown in FIG. 4, the XPS file has layers of three levels 10, 20, 30 (i.e., a job level 10, a document level 20, and a page level 30). A plurality of printing options for a document and a page are set in the document level 20 and the page level 30. For example, a printing option of "double-sided printing" is set in the job level 10, a printing option of "2-up" is set for the first document 21 of the document level 20, a printing option of "A4 paper" is set for the first page 31 of the first document 21, and a printing option of "A5 paper" is set for the second page 32 of the first document 21. In this case, the printing option at each node of the logical structure is effective over the lower layers under the node.

The communication interface 110 determines whether a received file is an XPS file. Specifically, if the received file is determined to be the XPS file, the communication interface 110 transmits the received XPS file to the XPS emulator unit 130 to perform a series of operations as will be described below. If the received file is printing data other than the XPS file (for example, a PDL file), the received file is transmitted to a corresponding emulator (for example, corresponding to printer command language (PCL) and/or postscript (PS)).

Moreover, the communication interface 110 receives a resource save printing command from the terminal device (not shown) connected to the image forming apparatus 100. That is, the series of operations consistent with an embodiment of the present invention, which will be described below, may be performed according to a user selection (i.e., may be performed according to a resource save printing command received from the terminal device). However, it is understood that aspects of the present invention are not limited thereto. For example, a resource save printing command may be directly input through the user interface 140.

The storage unit 120 stores the XPS file received through the communication interface 110. Furthermore, the storage unit 120 may store an XPS file in which redundancy has been replaced according to aspects of the present invention. The storage unit 120 may be realized as a storage medium internal to the image forming apparatus 100 or an external storage medium (such as a removable disk including a memory, a storage medium connected to the host, and a web server through a network).

The XPS emulator unit 130 replaces redundancy in the received XPS file with a parsing object and renders the XPS file in which the redundancy has been replaced. More specifically, the XPS emulator unit 130 comprises an unpacking unit 131, a parsing unit 132, a detection unit 133, a resource optimizing unit 134, and a rendering unit 135.

The unpacking unit 131 decompresses the received XPS file. As described above, the XPS file is a file that packs all resources used for a document or job and data describing reference relationships among the resources using XML in the ZIP format. Accordingly, the unpacking unit 131 unpacks an image compressed in the XPS file, a resource file (such as font), and the XML file. The unpacked XPS file is temporarily stored in the storage unit 120, in which case the unpacking unit 131 stores a physical file corresponding to a file system of the storage unit 120.

The parsing unit 132 parses the unpacked XPS file. Specifically, the parsing unit 132 parses a file of the unpacked XPS file received from the unpacking unit 131 that is described in XML (for example, data such as "Print Ticket" or "Fixed Page" describing a printing property for the corresponding XPS file). The parsing unit 132 may complete a parsing operation with respect to the whole XPS file through a single parsing operation or through a plurality of parsing operations.

The detection unit 133 detects whether the parsed XPS file includes redundancy. More specifically, the detection unit 133 detects whether the XPS file includes redundancy using a resource file of the XPS file parsed by the parsing unit 132 and of the XPS file unpacked by the unpacking unit 131. Herein, the term "redundancy" refers to a resource file or an XML describing area that causes an unnecessary resource to be used during the rendering process. For example, a slice image that can be integrated into a single image object, a duplicate image for the same area, and a clip path cause an unnecessary resource to be used. Accordingly, if a slice image, a duplicate image, or a clip path is included in the parsed XPS file, the detection unit 133 detects that the XPS file includes redundancy. In this case, the detection unit 133 transmits redundancy information to the user interface 140 to display the redundancy information to the user.

The detection unit 133 determines whether the detected redundancy is replaceable in the image forming apparatus 100. For example, if transparency is set in the XPS file, it is not easy for an image forming apparatus having a low resource to process the XPS file. Accordingly, if such settings and redundancy corresponding to the settings are included in the XPS file, the detection unit 133 transmits corresponding information to the user interface 140 and the controller 150 to not perform a printing operation with respect to a page including the corresponding setting or the corresponding redundancy.

If redundancy is included in the XPS file, the resource optimizing unit 134 replaces the redundancy of the parsed XPS file with a parsing object. Specifically, the resource optimizing unit 134 replaces the redundancy using a replacing method corresponding to the type of redundancy detected by the detection unit 133. For example, if the XPS file includes a slice image that can be integrated into the XPS file, the resource optimizing unit 134 renders the corresponding slice image to generate a combined single image, and replaces an image resource and an XML describing area for the slice image with the combined single image. Also, if the XPS file includes a duplicate object for the same area, the resource optimizing unit 134 removes an image resource and an XML describing area for the duplicate object except for an actual output object.

The rendering unit 135 renders the XPS file in which redundancy has been replaced. For example, the rendering unit 135 renders the XPS file in which redundancy has been replaced by the resource optimizing unit 134 to generate raw data of bitmap format for printing.

The user interface 140 is provided with one or more operation input devices (such as keys, a rotatable dial, a touch screen, etc.) to allow the user to set or select various operations supported by the image forming apparatus 100, and displays information provided by the image forming apparatus 100. The user interface 140 may be realized as a touch pad that enables input and output to be performed simultaneously, or may be realized as a device integrating a mouse and/or a monitor. Accordingly, the user can input a resource save printing command through the displayed operation keys.

The user interface 140 displays redundancy information if the received XPS file includes redundancy. The redundancy information may include information about the type of redundancy, where the redundancy is located, and/or whether the redundancy is replaceable in the image forming apparatus 100.

The controller 150 outputs the XPS file that has been rendered by the XPS emulator unit 130. Specifically, the controller 150 causes the XPS file that has been converted into raw data by the rendering unit 135 of the XPS emulator unit 130 to be transmitted to and printed by a printing engine (not shown). If the XPS file includes redundancy that is not processible by the image forming apparatus, the controller 150 may cause only pages that do not include a redundancy that is irreplaceable in the image forming apparatus 100 to be output.

Also, if the XPS file includes redundancy that is not processible in the image forming apparatus 100, the controller 150 may control the user interface 140 to display corresponding information. For example, if the XPS file to be printed includes redundancy that is not processible in the image forming apparatus 100, the controller 150 may control the user interface 140 to display information that a printing operation for the whole corresponding XPS file is stopped, and to allow the user to determine whether to continue to print the corresponding XPS file and whether to print a remaining page except for the redundancy-contained page.

Furthermore, the controller 150 may cause the XPS file in which redundancy has been replaced to be stored to the storage unit 120. In detail, the controller 150 may compress the XPS file in which redundancy has been replaced in the ZIP format and store the compressed file in the storage unit 120 in case the corresponding XPS file is repeatedly output. In this case, the controller 150 may store the XPS file in which redundancy has been replaced under a different name, or may overwrite an existing file with the XPS file. This operation may be selected by a user or may be automatically performed without an extra command from the user.

Though aspects of the present invention have been described with reference to the XPS file, it is understood that aspects of the present invention are not limited thereto, and are application to any file compressed in the ZIP format (such as Open Document Format (ODF), Office Open XML (OOXML), and scalable vector graphics (SVG) files).

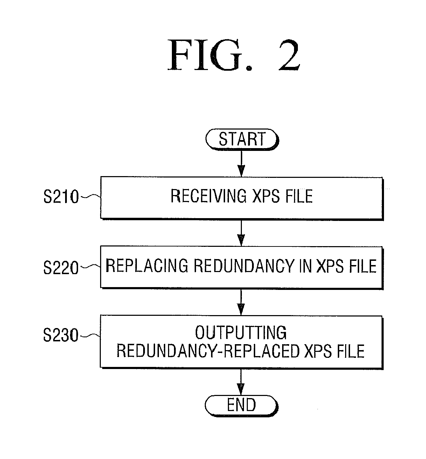

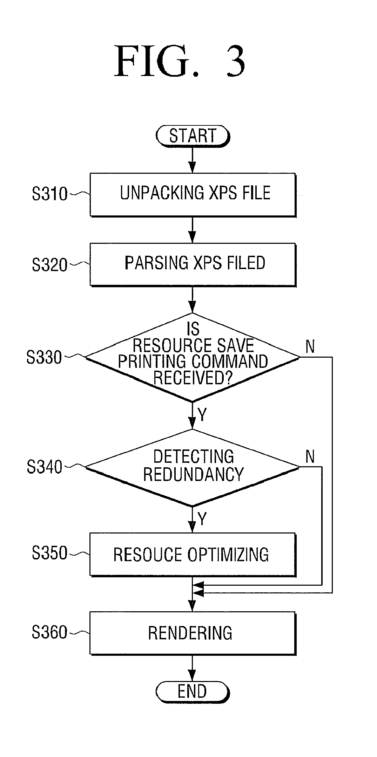

FIG. 2 is a flowchart illustrating an image forming method according to an embodiment of the present invention, and FIG. 3 is a flowchart illustrating the rendering operation of FIG. 2. Referring to FIG. 2, an XPS file is received in operation S210. Specifically, if printing data is received from a terminal device (not shown), it is determined whether the received data is an XPS file (i.e., whether the XPS file is received). Accordingly, redundancy included in the XPS file is replaced with a parsing object and the XPS file in which the redundancy has been replaced is rendered in operation S220. The rendering operation will be described in detail with reference to FIG. 3.

Referring to FIG. 3, the XPS file is unpacked in operation S310. As described above, the XPS file is a file that packs resources used for a document or a job and data describing reference relationships among the resources using XML in a ZIP format. Accordingly, the received XPS file is unpacked such that a resource file (such as an image and font in the XPS file) and an XML file are decompressed.

The unpacked XPS file is parsed in operation S320. Specifically, a file of the unpacked XPS file that is described using XML (for example, data describing a printing property for the corresponding XPS file, such as "Print Ticket" or "Fixed Page") is parsed. In this case, a single parsing operation may be performed for the whole XPS file or a parsing operation is separately performed for each page or each document area of the XPS file.

Then, it is determined whether a resource save printing command for the received XPS file is received in operation S330. It is understood that this operation may be performed upon selection from the user and/or if a resource save printing command is received from a terminal device or a user. According to other embodiments, this operation may be omitted.

Next, it is detected whether the parsed XPS file includes redundancy in operation S340. Specifically, it is determined whether the XPS file includes redundancy using a resource file of the parsed XPS file and the unpacked XPS file. The redundancy may be a resource file and an XML describing area that causes an unnecessary resource to be used during the rendering process, such as a slice image, a duplicate image, and a clip path. That is, if the parsed XPS file includes a slice image, a duplicate image, and/or a clip path, the XPS file is determined to include redundancy in operation S340. The operation S340 of detecting whether the XPS file includes redundancy may be performed separately or concurrently with the parsing operation S320. Furthermore, the redundancy detecting operation S340 may determine whether the detected redundancy is replaceable in the current image forming apparatus. For example, if transparency is set for the XPS file, an image forming apparatus having a low resource has difficulty in processing the XPS file. Accordingly, corresponding information is displayed for the user to select whether to continue to print the XPS file or whether to print a remaining page except for the redundancy-contained page.

Next, if redundancy is included in the XPS file, the redundancy in the parsed XPS file is replaced in operation S350. Specifically, the detected redundancy is replaced using a replacing method corresponding to the type of redundancy. Since the operation of replacing the redundancy is the same as that of the resource optimizing unit 134 described above with reference to FIG. 1, a detailed description will be omitted herein.

The XPS file in which redundancy has been replaced is rendered in operation S360. For example, the XPS file in which redundancy has been replaced is rendered such that raw data of bitmap format for printing is created.

Referring back to FIG. 2, the rendered XPS file is output in operation S230. That is, the XPS file that has been converted into raw data is transmitted to and output by a printing engine (not shown). If the XPS file includes redundancy that is irreplaceable in the image forming apparatus, only a page excluding a page including the irreplaceable redundancy may be output. Furthermore, the XPS file in which redundancy has been replaced may be re-compressed and stored in the ZIP format in case the corresponding XPS file is repeatedly printed. In this case, the XPS file in which redundancy has been replaced may be stored under a different XPS file name or may overwrite an existing file. This operation may be performed upon selection from the user or may be automatically performed without an extra user storing command.

Accordingly, the redundancy included in the XPS file is replaced so that unnecessary resources are not used. Therefore, an image forming apparatus having low resources can easily output the XPS file. Also, the printing control method described in FIGs. 2 and 3 can be executed in the image forming apparatus of FIG. 1 or can be executed in an image forming apparatus having a different composition.

While not restricted thereto, aspects of the present invention can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Aspects of the present invention may also be realized as a data signal embodied in a carrier wave and comprising a program readable by a computer and transmittable over the Internet.

Although a few embodiments of the present invention have been shown and described, it would be appreciated by those skilled in the art that changes may be made in these embodiments without departing from the principles of the invention, the scope of which is defined in the claims.

## Claims

1. An image forming apparatus comprising:
a communication interface to receive an XML paper specification (XPS) file;
an XPS emulator unit to replace redundancy in the received XPS file with a parsing object and to render the XPS file in which the redundancy has been replaced; and
a controller to output the rendered XPS file.

2. The image forming apparatus as claimed in claim 1, wherein the XPS emulator unit comprises:
a unpacking unit to unpack the received XPS file;
a parsing unit to parse the unpacked XPS file;
a detection unit to detect whether the parsed XPS file includes the redundancy;
a resource optimizing unit to replace the redundancy included in the XPS file with the parsing object; and
a rendering unit to render the XPS file in which the redundancy has been replaced with the parsing object.

3. The image forming apparatus as claimed in claim 1 or claim 2, wherein the communication interface determines whether the received file is the XPS file.

4. The image forming apparatus as claimed in claim 1 or claim 2, further comprising a user interface to receive a resource save printing command for the XPS file, wherein the user interface displays the redundancy included in the XPS file according to the parsing.

5. The image forming apparatus as claimed in claim 2, wherein, when the XPS file includes a slice image that is integrable into a single image object or a duplicate object for a same area, the detection unit determines that the XPS file includes the redundancy.
wherein, when the XPS file includes the redundancy, the detection unit determines a type of the redundancy and/or determines whether the redundancy is replaceable in the image forming apparatus.

6. The image forming apparatus as claimed in claim 5, wherein the resource optimizing unit does not replace the redundancy for a page that is determined to be irreplaceable by the detection unit,
wherein the controller does not output a page including irreplaceable redundancy.

7. The image forming apparatus as claimed in claim 2, wherein, when the parsed XPS file includes a slice image that is integrable into a single image object, the resource optimizing unit replaces the slice image with an integrated image object, and
wherein, when the parsed XPS file includes a duplicate object for a same area, the resource optimizing unit removes the duplicate object.

8. The image forming apparatus as claimed in claim 1 or claim 2, further comprising a storage unit to store the XPS file in which the redundancy has been replaced.

9. An image forming method of an image forming apparatus, the image forming method comprising:
receiving an XML paper specification (XPS) file;
parsing the received XPS file;
replacing redundancy in the received XPS file with a parsing object according to the parsing;
rendering the XPS file in which the redundancy has been replaced with the parsing object; and
outputting the rendered XPS file.

10. The image forming method as claimed in claim 9, further comprising determining whether the received file is the XPS file.

11. The image forming method as claimed in claim 9 or claim 10, wherein the replacing of the redundancy comprises, when the parsed XPS file includes a slice image that is integrable into a single image object, replacing the slice image with an integrated image object, and when the parsed XPS file includes a duplicate object for a same area, removing the duplicate object.

12. The image forming method as claimed in claim 9 or claim 10, wherein the parsing comprises determining a type of the redundancy included in the XPS file and/or determining whether the redundancy is replaceable in the image forming apparatus.

13. The image forming method as claimed in claim 9 or claim 10, further comprising, when the XPS file includes redundancy that is irreplaceable in the image forming apparatus, displaying corresponding information to a user.

14. The image forming method as claimed in claim 12, wherein the replacing of the redundancy comprises, when the XPS file includes the redundancy that is irreplaceable in the image forming apparatus, not replacing the redundancy for a page including the irreplaceable redundancy, and
wherein the outputting comprises not outputting a page including the redundancy that is irreplaceable in the image forming apparatus.

15. The image forming method as claimed in claim 9 or claim 10, further comprising storing the XPS file in which the redundancy has been replaced.
